# EUROPÄISCHE PATENTSCHRIFT

(11) **EP 1 932 713 B1**
(45) Veröffentlichungstag und Bekanntmachung des Hinweises auf die Patenterteilung: **27.07.2011**
(21) Anmeldenummer: 07020888.9
(22) Anmeldetag: 25.10.2007
(51) Int. Cl.: B60N 2/20

(54) **Mittelsitz für eine Kraftfahrzeugrücksitzbank**
Central seat for a rear seat bench of a motor vehicle
Siège central pour une banquette arrière de véhicule automobile

(30) Priorität: 12.12.2006 DE 102006058480
(43) Veröffentlichungstag der Anmeldung: 18.06.2008
(73) Patentinhaber: GM Global Technology Operations LLC, Detroit, MI 48265-3000 (US)
(72) Erfinder: Stepan, Sven, 64521 Gross-Gerau (DE)
(74) Vertreter: Daniel, Ulrich W.P.

(56) Entgegenhaltungen:
- DE-A1- 19 742 408
- GB-A- 2 395 118

## Beschreibung

Die Erfindung betrifft einen Mittelsitz für eine Kraftfahrzeugrücksitzbank, die in einem Kraftfahrzeug hinter dem Fahrer und dem Beifahrer angeordnet ist. Der Mittelsitz ermöglicht es, dass auf der Rücksitzbank drei Personen Platz nehmen können. Die Erfindung betrifft insbesonder einen Mittelsitz mit den Merkmalen des Oberbegriffs von Anspruch 1. Ein derartiger Mittelsitz ist aus der DE 197 42 408 A1 bekannt.

Der Mittelsitz einer Kraftfahrzeugsitzbank ist im Vergleich zu den übrigen Sitzplätzen eines Kraftfahrzeuges unbequemer, da er üblicherweise nicht ganz so breit wie die übrigen Sitze des Kraftfahrzeuges ist. Es gibt daher Bestrebungen, den nur wenig genutzten Mittelsitz mit zusätzlichen Funktionen auszustatten ohne jedoch im Bedarfsfall seine Funktion als Sitzplatz ein-zuschränken. Beispielsweise aus DE 43 42 959 A1 ist ein Mittelsitz für eine Kraftfahrzeugrücksitzbank bekannt, der ein Sitzteil und eine mit dem Sitzteil verbundene Rückenlehne aufweist. Die Rückenlehne weist zwei gelenkig mit der Rückenlehne verbundene Polsterteile auf, so dass der Mittelsitz in einen Kindersitz umgewandelt werden kann. Hierbei schützen das obere Polsterteil, das untere Polsterteil und die restliche Rückenlehne das Kind.

Nachteilig bei einem derartigen Mittelsitz ist, dass der Mittelsitz den Komfort für die benachbarten Sitze einer Kraftfahrzeugrücksitzbank beeinträchtigt.

Die DE 197 42 408 A1 offenbart eine Sitzstruktur für ein Fahrzeug, die einen Mittelsitz umfasst. Dieser Mittelsitz besteht aus einem Sitzteil, einem unteren Rückenabschnitt und einem oberen Rückenabschnitt. Der untere Rückenabschnitt ist mit dem Sitzteil und der obere Rückenabschnitt mit dem unteren Rückenabschnitt gelenkig verbunden. Der untere Rückenabschnitt und der obere Rückenabschnitt können aus der aufrechten Position nach vorne geschwenkt werden. In dieser nach vorne geschwenkten Position kann der obere Rückenabschnitt als Armlehne oder als Tisch verwendet werden.

Es ist die Aufgabe der Erfindung einen Mittelsitz für eine Kraftfahrzeugrücksitzbank zu schaffen, die einen verbesserten Komfort ermöglicht, ohne ihre Funktion als Sitz einzubüßen.

Die Lösung der Aufgabe erfolgt erfindungsgemäß durch die Merkmale des Anspruchs 1. Vorteilhafte Ausgestaltungen der Erfindung sind in den Unteransprüchen angegeben.

Der erfindungsgemäße Mittelsitz für eine Kraftfahrzeugrücksitzbank weist ein Sitzteil auf, mit dem eine Rückenlehne verbunden ist. Ferner ist die Rückenlehne in ein Oberteil und ein gelenkig mit dem Oberteil verbundenes Unterteil aufgeteilt. Die Aufteilung erfolgt derart, dass der Mittelsitz im Bereich des Oberteils vollständig von einer aufrechten Position (Sitzposition) in eine im Wesentlichen horizontale Position (Komfortposition) bewegbar ist. Es wird also im oberen Bereich der Rückenlehne nicht nur ein Teil der Rückenlehne sondern die gesamte Rückenlehne bewegt.

Dadurch, dass nicht nur ein Polster der Rückenlehne sondern das Polster einschließlich des zugehörigen Bereichs einer Sitzschale in eine horizontale Position bewegt werden kann, ergibt sich eine Öffnung im Bereich des Oberteils des Mittelsitzes die zwischen den benachbarten Sitzen der Kraftfahrzeugrücksitzbank angeordnet ist. Diese Öffnung ermöglicht es beispielsweise während der Fahrt auf den Kofferraum des Kraftfahrzeugs zuzugreifen, sofern keine zusätzliche Trennwand vorgesehen ist. Insbesondere wird hierdurch der Transport von insbesondere länglichen Gegenständen erleichtert, da der zu transportierende Gegenstand auf der Rückseite des Oberteils aufliegen kann und im Bereich der sich zwischen den benachbarten Sitzen ergebenen Öffnung von den benachbarten Sitzen seitlich gestützt wird. Die Gefahr, dass der zu transportierende Gegenstand auf die benachbarten Sitze fallen kann, ist dadurch reduziert, so dass der Komfort von Personen die auf den Nachbarsitzen sitzen verbessert ist. Ferner ergibt sich zwischen dem Oberteil und dem Sitzteil ein Zwischenraum, dessen Höhe im Wesentlichen durch die Länge des Unterteils bestimmt wird. Dieser Zwischenraum zwischen dem Oberteil und dem Sitzteil vergrößert die Beinfreiheit von auf den benachbarten Sitzen sitzenden Personen, wodurch der Komfort zusätzlich verbessert ist. Insbesondere erfolgt die Teilung der Rückenlehne in das Oberteil und das Unterteil derart, dass das Oberteil in der im Wesentlichen horizontalen Position eine Armlehne ausbildet. Die Rückseite des Oberteils dient in diesem Fall als Armauflage einer Armlehne.

Erfindungsgemäß ist das Unterteil von einer aufrechten Position (Sitzposition) in eine im Wesentlichen horizontale Position bewegbar. Besonders bevorzugt ist zusätzlich bzw. alternativ das Sitzteil zwischen einer Sitzposition und einer Tiefstellung höhenverstellbar. Das Sitzteil kann insbesondere in Fahrtrichtung bzw. entgegen der Fahrtrichtung, d. h. vor und zurück bewegbar sein. Dies ermöglicht es, die Rückenlehne auch während der Fahrt vollständig auf das Sitzteil zu bewegen. Ferner kann der gesamte Mittelsitz zusammen mit der umgeklappten Rückenlehne als ganzes versenkt werden, so dass der Mittelsitz nicht stört. Insbesondere, wenn die benachbarten Sitze d. h. ein rechter Sitz und ein linker Sitz quer zur Fahrtrichtung verschiebbar sind, können der rechte Sitz und der linke Sitz derart geformt sein, dass in Tiefstellung des Mittelsitzes der Mittelsitz zumindest teilweise unter die Sitze positioniert werden kann. Dies ermöglicht es aus einer drei Sitzplätze aufweisenden Kraftfahrzeugrücksitzbank eine Kraftfahrzeugrücksitzbank zu machen, die nur noch zwei Sitze aufweist, wobei die verbleibenden Sitze aufgrund der erhöhten Bewegungsfreiheit einen deutlich verbesserten Komfort bieten.

Für das Oberteil, das Unterteil und das Sitzteil kann jeweils ein Betätigungselement vorgesehen sein, welches das Oberteil bzw. das Unterteil bzw. das Sitzteil entriegelt und/oder verriegelt. Die Entriegelung bzw. Verriegelung erfolgt insbesondere in der aufrechten Position und/oder in der horizontalen Position. Insbesondere ist auch ein Entriegeln oder Verriegeln in einer sonstigen definierten Position möglich. Die Betätigungselemente sind insbesondere im Oberteil angeordnet, so dass sie leicht zugänglich sind. Damit die einzelnen Betätigungselemente nicht miteinander verwechselt werden, können sie auch an unterschiedlichen Bauteilen angeordnet sein. Beispielsweise kann ein erstes Betätigungselement zum Betätigen des Oberteils im Oberteil angeordnet sein, ein zweites Betätigungselement zum Betätigen des Unterteils im Unterteil angeordnet sein und ein drittes Betätigungselement zum Betätigen des Sitzteils im Sitzteil angeordnet sein.

In einer bevorzugten Ausführungsform ist eine Kopfstütze vorgesehen, die federbelastet mit dem Oberteil verbunden ist. Die Kopfstütze ist derart dimensioniert, dass sie in der im Wesentlichen horizontalen Position des Oberteils und des Unterteils die Rückenlehne mit dem Sitzteil verklemmen kann. Wenn also die Rückenlehne auf das Sitzteil umgeklappt ist, führt die Federkraft der Kopfstütze dazu, dass die Rückenlehne bzw. das Oberteil und/oder das Unterteil nicht versehentlich wieder hochgeklappt werden. Insbesondere wenn eine Person ihre Beine übereinander schlägt und versehentlich gegen die umgeklappte Rückenlehne tritt wird eine Bewegung der Rückenlehne vermieden.

In einer besonders bevorzugten Ausführungsform weist das Oberteil und gegebenenfalls das Unterteil einen insbesondere verschließbaren Stauraum auf. Dieser Stauraum wird zugänglich, wenn das Oberteil in seine im Wesentlichen horizontale Position bewegt ist. Es ist somit möglich, das Oberteil umzuklappen, Gegenstände im Stauraum zu verstauen und das Oberteil anschließend wieder in die Sitzposition zurück zu bewegen. Besonders bevorzugt weist das Oberteil und gegebenenfalls das Unterteil eine Vertiefung, insbesondere zur Aufnahme einer Getränkedose auf. Ein Verschütten von Getränken während der Fahrt kann dadurch verhindert werden.

Die Erfindung betrifft ferner einer Rücksitzbank für ein Kraftfahrzeug mit einem rechten Sitz, einem linken Sitz und einem zwischen dem rechten Sitz und dem linken Sitz angeordneten Mittelsitz, der wie vorstehend erläutert aus- und weitergebildet sein kann. Der rechte Sitz und der linke Sitz sind jeweils quer zur Fahrtrichtung verschiebbar und sind derart geformt, dass in Tiefstellung des Mittelsitzes der Mittelsitz zumindest teilweise unterhalb des linken Sitzes und des rechten Sitzes positionierbar ist. Dies ermöglicht es aus einer dreisitzigen Rücksitzbank eine besonders bequeme zweisitzige Rücksitzbank zu machen.

Vorzugsweise sind der rechte Sitz, der linke Sitz, und der Mittelsitz mit einem gemeinsamen Unterboden verbunden, so dass die Sitze als ein gemeinsames Modul in ein Kraftfahrzeug eingebaut werden können.

Besonders bevorzugt ist die Rückseite des Oberteils in Tiefstellung des Mittelsitzes bündig zu den Oberseiten der Sitzkissen des rechten und linken Sitzes angeordnet. Dadurch ergibt sich eine im Wesentlichen ebene Fläche die sich über die gesamte Breite der Rücksitzbank erstreckt. Besonders bevorzugt ist der Bereich der Rückenlehne kleiner als die Breite des Sitzteils. Ferner sollten die Breiten der Rückenkissen größer als die Breite der Sitzkissen sein. Dadurch ist es möglich in der Tiefstellung des Mittelsitzes den rechten Sitz und den linken Sitz teilweise über das Sitzteil zu schieben bis die Sitze an der Rückenlehne des Mittelsitzes anstoßen. Vorzugsweise stoßen in dieser Position die Rückenkissen des rechten und des linken Sitzes aneinander. Dadurch ergibt sich eine Rücksitzbank, die eine im Wesentlichen ebene Sitzfläche und eine im Wesentlichen ebene Rückenlehnenfläche aufweist. Die Rücksitzbank kann also in eine besonders bequeme Rücksitzbank für zwei Personen umgewandelt werden, die gegebenenfalls gleichzeitig den Zugang zu einem Aufbewahrungsfach in der Rückenlehne des Mittelsitzes ermöglicht.

Nachfolgend wird die Erfindung unter Bezugnahme auf die anliegenden Zeichnungen näher erläutert. Es zeigen:

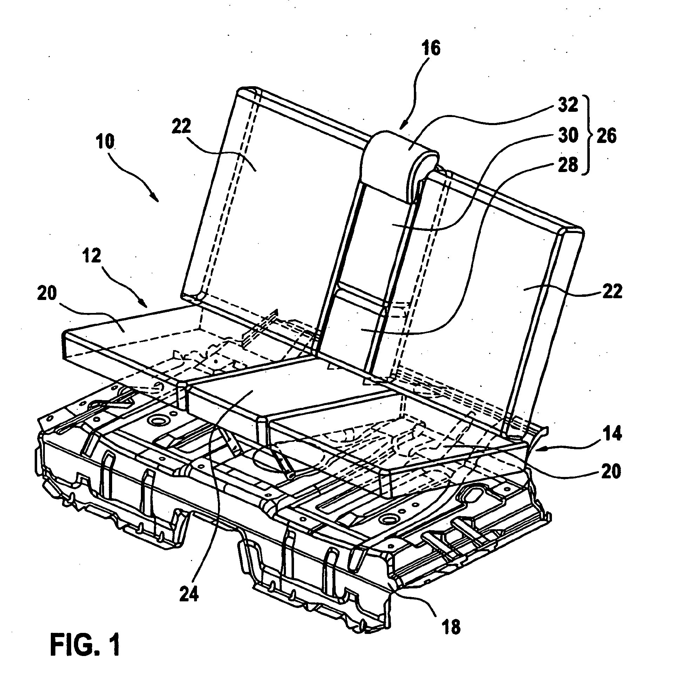

- Fig. 1: eine schematische perspektivische Ansicht einer erfindungsgemäßen Rücksitzbank,
- Fig. 2: eine schematische perspektivische Ansicht eines erfindungsgemäßen Mittelsitzes in einer ersten Position,
- Fig. 3: eine schematische perspektivische Ansicht des Mittelsitzes aus Fig. 2 in einer zweiten Position,
- Fig. 4: eine schematische perspektivische Ansicht des Mittelsitzes aus Fig. 2 in einer dritten Position und
- Fig. 5: eine schematische Draufsicht der Rücksitzbank aus Fig. 1.

Die erfindungsgemäße Rücksitzbank 10 weist einen rechten Sitz 12 und einen linken Sitz 14 auf, zwischen denen ein Mittelsitz 16 angeordnet ist. Die Sitze 12, 14, 16 sind mit einem gemeinsamen Unterboden 18 verbunden. Der rechte Sitz 12 und der linke Sitz 14 weisen jeweils ein Sitzkissen 20 und ein Rückenkissen 22 auf. Der Mittelsitz 16 weist ein Sitzteil 24 und eine Rückenlehne 26 auf, wobei die Rückenlehne 26 im dargestellten Ausführungsbeispiel ein Unterteil 28, ein Oberteil 30 und eine Kopfstütze 32 aufweist.

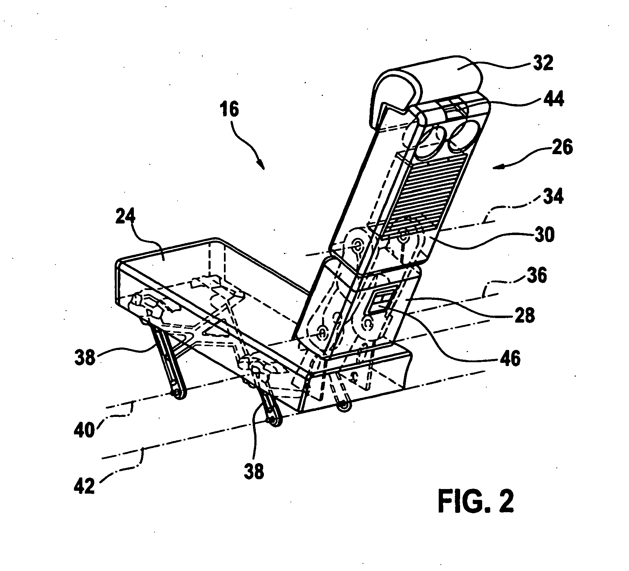

Das Oberteil 30 ist gelenkig mit dem Unterteil 28 verbunden, das wiederum gelenkig mit dem Sitzteil 24 verbunden ist (Fig. 2) . Das Oberteil 30 ist hierbei um eine erste Schwenkachse 34 schwenkbar, während das Unterteil 28 um eine zweite Schwenkachse 36 schwenkbar ist. Das Sitzteil 24 weist Streben 38 auf, die jeweils um eine dritte Schwenkachse 40 und eine vierte Schwenkachse 42 verschwenkt werden können, um das Sitzteil 24 in der Höhe zu verstellen. Um das Oberteil 30 bewegen zu können, muss im dargestellten Ausführungsbeispiel zunächst ein erstes Betätigungselement 44 betätigt werden, um das Oberteil um die erste Schwenkachse 34 klappen zu können. Entsprechend muss zum Betätigen des Schwenkteils 28 zunächst ein zweites Betätigungselement 46 betätigt werden. Mit Hilfe eines nicht dargestellten dritten Betätigungselements kann das Sitzteil 24 gemeinsam mit der Rückenlehne 26 in der Höhe verstellt werden.

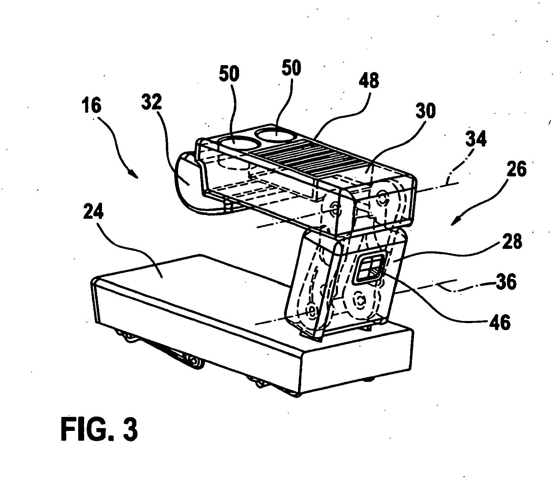

In einer im Wesentlichen horizontalen Position des Oberteils 30 bildet der Mittelsitz 16 eine durch das Oberteil 30 gebildete Armlehne aus (Fig. 3). Im dargestellten Ausführungsbeispiel ist in dem Oberteil 30 ein verschließbarer Stauraum 48 und Vertiefungen 50 für Getränkedosen vorgesehen.

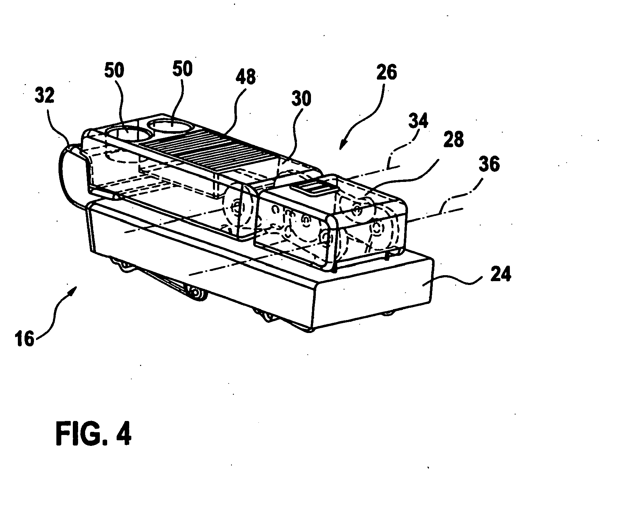

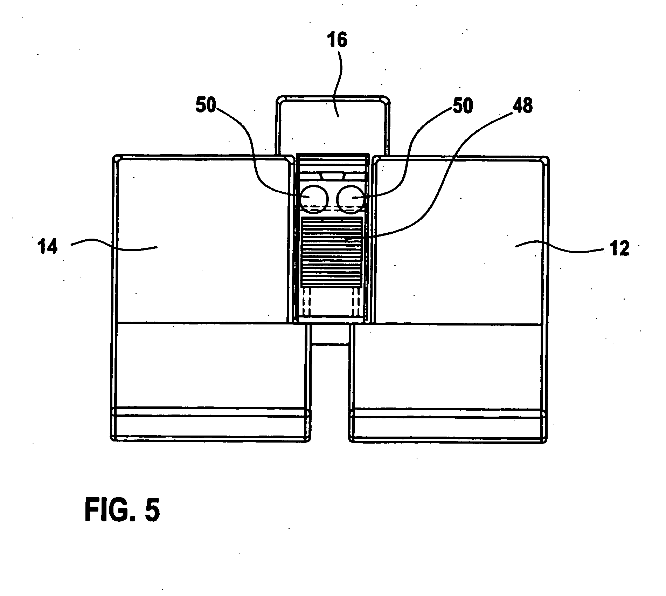

Wenn zusätzlich zu dem Oberteil 30 das Unterteil 28 sich in der im Wesentlichen horizontalen Position befindet (Fig. 4), kann die Kopfstütze 32 die Rückenlehne 26 mit dem Sitzteil 24 verbinden, indem eine Federkraft die Kopfstütze 32 gegen das Sitzteil 24 drückt. In dieser Position kann der rechte Sitz 12 und der linke Sitz 14 teilweise über den Mittelsitz 16 geschoben werden (Fig. 5), so dass sich aufgrund der zusätzlichen Beinfreiheit für die Sitze 12, 14 ein erhöhter Komfort ergibt. Gleichzeitig sind der verschließbare Stauraum 48 und die Vertiefungen 50 für Getränkedosen zugänglich.

### Bezugszeichenliste

- 10: Rücksitzbank
- 12: rechter Sitz
- 14: linker Sitz
- 16: Mittelsitz
- 18: Unterboden
- 20: Sitzkissen
- 22: Rückenkissen
- 24: Sitzteil
- 26: Rückenlehne
- 28: Unterteil
- 30: Oberteil
- 32: Kopfstütze
- 34: erste Schwenkachse
- 36: zweite Schwenkachse
- 38: Strebe
- 40: dritte Schwenkachse
- 42: vierte Schwenkachse
- 44: erstes Betätigungselement
- 46: zweites Betätigungselement
- 48: Stauraum
- 50: Vertiefung

## Patentansprüche

1. Mittelsitz für eine Kraftfahrzeugrücksitzbank (10), mit
einem Sitzteil (24) und
einer mit dem Sitzteil (24) verbundenen Rückenlehne (26),
wobei die Rückenlehne (26) in ein Oberteil (30) und ein gelenkig mit dem Oberteil (30) verbundenes Unterteil (28) derart aufgeteilt ist, dass der Mittelsitz (16) im Bereich des Oberteils (30) vollständig von einer aufrechten Position in eine im Wesentlichen horizontale Position bewegbar ist
**dadurch gekennzeichnet, dass**
das Unterteil (28) von einer aufrechten Position in eine im Wesentlichen horizontale Position bewegbar ist.

2. Mittelsitz nach Anspruch 1 **dadurch gekennzeichnet, dass** das Sitzteil (24) zwischen einer Sitzposition und einer Tiefstellung höhenverstellbar ist.

3. Mittelsitz nach einem der Ansprüche 1 oder 2 **dadurch gekennzeichnet, dass** die Rückenlehne (26) derart geteilt ist, dass das Oberteil (30) in der im Wesentlichen horizontalen Position eine Armlehne ausbildet.

4. Mittelsitz nach einem der Ansprüche 1 bis 3 **dadurch gekennzeichnet, dass** das Oberteil (30) einen insbesondere verschließbaren Stauraum (48) und/oder eine Vertiefung (50) zur Aufnahme einer Getränkedose aufweist.

5. Mittelsitz nach einem der Ansprüche 1 bis 4 **dadurch gekennzeichnet, dass** das Oberteil (30) ein erstes Betätigungselement (44) zum Entriegeln und/oder Verriegeln des Oberteils (30) in der aufrechten Position und/oder der horizontalen Position und/oder einer sonstigen definierten Position aufweist.

6. Mittelsitz nach einem der Ansprüche 2 bis 5 **dadurch gekennzeichnet, dass** das Oberteil (30) und/oder das Unterteil (28) ein zweites Betätigungselement (46) zum Entriegeln oder Verriegeln des Unterteils (28) in der aufrechten Position und/oder der horizontalen Position und/oder einer sonstigen definierten Position aufweist.

7. Mittelsitz nach einem der Ansprüche 2 bis 6 **dadurch gekennzeichnet, dass** das Oberteil (30) und/oder das Unterteil (28) und/oder das Sitzteil (24) ein drittes Betätigungselement zum Entriegeln und/oder Verriegeln des Sitzteils in der Sitzposition und/oder der Tiefstellung und/oder einer sonstigen definierten Position aufweist.

8. Mittelsitz nach einem der Ansprüche 1 bis 7 **gekennzeichnet durch** eine mit dem Oberteil (30) federbelastet verbundene Kopfstütze (32), wobei die Kopfstütze (32) in der horizontalen Position des Oberteils (30) und des Unterteils (28) die Rückenlehne (26) mit dem Sitzteil (24) verklemmt.

9. Rücksitzbank für ein Kraftfahrzeug, mit
einem rechten Sitz (12),
einem linken Sitz (14) und
einem zwischen dem rechten Sitz (12) und dem linken Sitz (14) angeordneten Mittelsitz (16) nach einem der Ansprüche 1 bis 8,
wobei der rechte Sitz (12) und der linke Sitz (14) quer zur Fahrtrichtung verschiebbar sind und
der rechte Sitz (12) und der linke Sitz (14) derart geformt sind, dass in Tiefstellung des Mittelsitzes (16) der Mittelsitz (16) zumindest teilweise unterhalb des rechten Sitzes (12) und des linken Sitzes (14) positionierbar ist.

10. Rücksitzbank nach Anspruch 9 **dadurch gekennzeichnet, dass** der rechte Sitz (12), der linke Sitz (14) und der Mittelsitz (16) mit einem gemeinsamen Unterboden (18) verbunden sind.

11. Rücksitzbank nach Anspruch 9 oder 10 **dadurch gekennzeichnet, dass** in Tiefstellung des Mittelsitzes (16) eine Rückseite des Oberteils (30) bündig zu einer Oberseite eines Sitzkissens (20) des rechten Sitzes (12) und einer Oberseite eines Sitzkissens (20) des linken Sitzes (14) angeordnet ist.

12. Rücksitzbank nach einem der Ansprüche 9 bis 11 **dadurch gekennzeichnet, dass** die Breite der Rückenlehne (16) kleiner als die Breite des Sitzteils (24) ist und die Breite eines Rückenkissens (22) des linken Sitzes (14) größer als die Breite des Sitzkissens (20) des linken Sitzes (14) ist und die Breite eines Rückenkissens (22) des rechten Sitzes (12) größer ist als die Breite des Sitzkissens (20)des rechten Sitzes (12) ist.

## Claims

1. A center seat for a vehicle rear-seat bench (10), comprising a seating part (24) and a backrest (26) joined to the seating part (24), with the backrest (26) being divided into an upper part (30) and a lower part (28) hinge-connected with the upper part (30) in such a way that the center seat (16) can be moved fully in the region of the upper part (30) from an upright position to a substantially horizontal position, **characterized in that** the lower part (28) can be moved from an upright position to a substantially horizontal position.

2. A center seat according to claim 1, **characterized in that** the seating part (24) is height-adjustable between a sitting position and a low position.

3. A center seat according to one of the claims 1 or 2, **characterized in that** the backrest (26) is divided in such a way that the upper part (30) forms an armrest in the substantially horizontal position.

4. A center seat according to one of the claims 1 to 3, **characterized in that** the upper part (30) comprises an especially closeable stowage space (48) and/or a depression (50) for accommodating a beverage can.

5. A center seat according to one of the claims 1 to 4, **characterized in that** the upper part (30) comprises a first actuating element (44) for unlocking and/or locking the upper part (30) in the upright position and/or the horizontal position and/or any other defined position.

6. A center seat according to one of the claims 2 to 5, **characterized in that** the upper part (30) and/or the lower part (28) comprise a second actuating element (46) for unlocking or locking the lower part (28) in the upright position and/or the horizontal position and/or any other defined position.

7. A center seat according to one of the claims 2 to 6, **characterized in that** the upper part (30) and/or the lower part (28) and/or the seating part (24) comprise a third actuating element for unlocking and/or locking the seating part in the sitting position and/or the low position and/or any other defined position.

8. A center seat according to one of the claims 1 to 7, **characterized by** a headrest (32) which is connected in a spring-loaded manner with the upper part (30), with the headrest (32) clamping the backrest (26) with the seating part (24) in the horizontal position of the upper part (30) and the lower part (28).

9. A rear-seat bench for a motor vehicle, comprising a right seat (12), a left seat (14) and a center seat (16) according to one of the claims 1 to 8 which is disposed between the right seat (12) and the left seat (14), with the right seat (12) and the left seat (14) being displaceable transversely to the direction of travel, and the right seat (12) and the left seat (14) being formed in such a way that in the low position of the center seat (16) the center seat (16) can be positioned at least partly beneath the right seat (12) and the left seat (14).

10. A rear-seat bench according to claim 9, **characterized in that** the right seat (12), the left seat (14) and the center seat (16) are connected with a common underbody (18).

11. A rear-seat bench according to claim 9 or 10, **characterized in that** in the low position of the center seat (16) a rear side of the upper part (30) is arranged to be flush with an upper side of a seat cushion (20) of the right seat (12) and an upper side of a seat cushion (20) of the left seat (14).

12. A rear-seat bench according to one of the claims 9 to 11, **characterized in that** the width of the backrest (16) is smaller than the width of the seating part (24), and the width of a back cushion (22) of the left seat (14) is larger than the width of the seat cushion (20) of the left seat (14), and the width of a back cushion (22) of the right seat (12) is larger than the width of the seat cushion (20) of the right seat (12).

## Revendications

1. Siège central pour une banquette arrière de véhicule à moteur (10), avec
une partie d'assise (24) et
un dossier (26) relié à la partie d'assise (24),
dans lequel le dossier (26) est partagé en une partie supérieure (30) et une partie inférieure (28) reliée de manière articulée à la partie supérieure (30), de telle manière que le siège central (16) peut être complètement déplacé au niveau de la partie supérieure (30) d'une position dressée à une position sensiblement horizontale,
**caractérisé en ce que** la partie inférieure (28) peut être déplacée d'une position dressée à une position sensiblement horizontale.

2. Siège central selon la revendication 1, **caractérisé en ce que** la partie d'assise (24) est réglable en hauteur entre une position d'assise et une position basse.

3. Siège central selon l'une des revendications 1 ou 2, **caractérisé en ce que** le dossier (26) est partagé de telle manière que la partie supérieure (30) forme un accoudoir dans la position sensiblement horizontale.

4. Siège central selon l'une des revendications 1 à 3, **caractérisé en ce que** la partie supérieure (30) présente un espace de rangement (48), en particulier pouvant être fermé, et/ou un renfoncement (50) pour recevoir une boîte de boisson.

5. Siège central selon l'une des revendications 1 à 4, **caractérisé en ce que** la partie supérieure (30) présente un premier élément d'actionnement (44) pour le déverrouillage et/ou le verrouillage de la partie supérieure (30) dans la position dressée et/ou la position horizontale et/ou une autre position définie.

6. Siège central selon l'une des revendications 2 à 5, **caractérisé en ce que** la partie supérieure (30) et/ou la partie inférieure (28) présentent un deuxième élément d'actionnement (46) pour déverrouiller ou verrouiller la partie inférieure (28) dans la position dressée et/ou la position horizontale et/ou une autre position définie.

7. Siège central selon l'une des revendications 2 à 6, **caractérisé en ce que** la partie supérieure (30) et/ou la partie inférieure (28) et/ou la partie d'assise (24) présentent un troisième élément d'actionnement pour déverrouiller et/ou verrouiller la partie d'assise dans la position d'assise et/ou la position basse et/ou une autre position définie.

8. Siège central selon l'une des revendications 1 à 7, **caractérisé en ce qu'**il comporte un appuie-tête (32) assemblé avec la partie supérieure (30) sous la contrainte d'un ressort, l'appuie-tête (32) serrant le dossier (26) avec la partie d'assise (24) quand la partie supérieure (30) et la partie inférieure (28) sont dans la position horizontale.

9. Banquette arrière pour un véhicule à moteur, avec
un siège de droite (12),
un siège de gauche (14) et
un siège central (16) selon l'une des revendications 1 à 8 disposé entre le siège de droite (12) et le siège de gauche (14),
dans laquelle le siège de droite (12) et le siège de gauche (14) sont capables de translation perpendiculairement au sens de la marche et
le siège de droite (12) et le siège de gauche (14) ont une forme telle que dans la position basse du siège central (16), le siège central (16) puisse être positionné au moins partiellement en dessous du siège de droite (12) et du siège de gauche (14).

10. Banquette arrière selon la revendication 9, **caractérisée en ce que** le siège de droite (12), le siège de gauche (14) et le siège central (16) sont assemblés à un fond commun (18).

11. Banquette arrière selon la revendication 9 ou 10, **caractérisée en ce que** quand le siège central (16) est en position basse, une face arrière de la partie supérieure (30) est disposée en affleurement à une face supérieure d'un coussin de siège (20) du siège de droite (12) et à une face supérieure d'un coussin de siège (20) du siège de gauche (14).

12. Banquette arrière selon l'une des revendications 9 à 11, **caractérisée en ce que** la largeur du dossier (16) est plus petite que la largeur de la partie d'assise (24) et la largeur d'un coussin de dossier (22) du siège de gauche (14) est plus grande que la largeur du coussin de siège (20) du siège de gauche (14) et la largeur d'un coussin de dossier (22) du siège de droite (12) sont plus grandes que la largeur du coussin de siège (20) du siège de droite (12).
